# FASCICULE DE BREVET EUROPEEN

(11) **EP 1 918 169 B1**
(45) Date de publication et mention de la délivrance du brevet: **16.12.2009**
(21) Numéro de dépôt: 07118125.9
(22) Date de dépôt: 09.10.2007
(51) Int. Cl.: B60T 13/563, B60T 13/567, F16J 15/32

(54) **Servomoteur pneumatique tandem d'assistance de freinage d'un véhicule**
Pneumatischer Tandem-Bremskraftverstärker für ein Fahrzeug
Tandem pneumatic brake booster for a vehicle

(30) Priorité: 02.11.2006 FR 0609691
(43) Date de publication de la demande: 07.05.2008
(73) Titulaire: ROBERT BOSCH GMBH, 70442 Stuttgart (DE)
(72) Inventeur: Diaz Bueno, Ignacio, 78170 La Celle Saint Cloud (FR); Ast, Christian, 92500 Rueil Malmaison (FR); Caquet, Christian, 77181 Courtry (FR); Michon, Jean-Pierre, 77178 Saint Pathus (FR)
(74) Mandataire: Hurwic, Aleksander Wiktor

(56) Documents cités:
- DE-C1- 3 639 315
- FR-A1- 2 614 383
- US-A- 5 062 348

## Description

La présente invention se rapporte à un servomoteur pneumatique tandem d'assistance de freinage d'un véhicule tels que décrits dans US-A-5 062 348 et DE 36 39 315. L'invention a pour but de permettre un retour d'une pédale de frein en position de repos après une course maximale d'une tige de poussée de ce servomoteur. L'invention prévoit d'empêcher le maintient d'une dépression dans une première chambre avant du servomoteur. L'invention concerne plus particulièrement le domaine de l'automobile mais peut également s'appliquer dans d'autres domaines.

Un servomoteur pneumatique tandem d'assistance de freinage d'un véhicule est situé entre une pédale de frein du véhicule et un maître cylindre. Le servomoteur permet de transformer un appui d'un pied d'un conducteur sur une pédale de frein en une pression amplifiée pneumatiquement. Cette pression amplifiée pneumatiquement est destinée à freiner le véhicule. De ce fait, le servomoteur permet de soulager notablement un effort fourni par le conducteur lorsqu'il appuie sur la pédale de frein.

Un tel servomoteur comporte, dans une coque de servomoteur, une première chambre avant et une première chambre arrière montées en série avec une deuxième chambre avant et une deuxième chambre arrière. La première chambre avant et la deuxième chambre avant sont respectivement plus proches d'un maître cylindre de freinage que la première chambre arrière et à la deuxième chambre arrière. La deuxième chambre avant et la deuxième chambre arrière sont plus proche du maître cylindre que la première chambre avant et la première chambre arrière.

Chacune des chambres comporte un volume variable. La première et la deuxième chambre avant sont respectivement séparées de manière étanche de la première et deuxième chambre arrière par une première et une deuxième jupe plaque. Chaque jupe plaque est formée par une membrane étanche et souple associée à une plaque rigide. La membrane de la jupe plaque repose sur la plaque rigide. La plaque rigide est en appui sur un piston pneumatique formant la tige de poussée qui actionne le maître cylindre. La membrane est fixée au piston pneumatique d'un coté, et à une paroi de la coque du servomoteur en regard du piston pneumatique d'un autre coté.

La première chambre avant est séparée de manière étanche de la deuxième chambre arrière par une cloison rigide fixe dans le servomoteur. Cette cloison fixe est solidaire d'une paroi de la coque en regard du piston pneumatique.

La première et la deuxième chambre avant communiquent entre elles par un ou plusieurs conduits de communication. De tels conduits de communication débouchent dans une partie centrale creuse du piston pneumatique. Le nombre de conduits présents dans le piston pneumatique doit être suffisant pour permettre une bonne communication entre la première chambre avant et la partie centrale creuse du piston pneumatique, sans fragiliser la structure du piston pneumatique. De tels conduits de communication entre la partie centrale creuse du piston et la première chambre avant possèdent une extrémité débouchant dans la première chambre avant, à un endroit proche d'un appui de la première jupe plaque. Ils possèdent une extrémité débouchant dans la partie centrale creuse du piston pneumatique. La partie centrale creuse du piston pneumatique en regard du maître cylindre est ouverte et communique avec la deuxième chambre avant.

Une des chambres avants, en général la deuxième chambre avant, est reliée à une source de vide. Cette source de vide peut être, par exemple, une pompe à vide fixée sur la coque du servomoteur. Cette pompe à vide communique alors avec les chambres avants. La pompe à vide maintient une dépression dans les deux chambres avants grâce aux conduits de communication entre elles.

Le servomoteur contient par ailleurs une valve de communication. Cette valve bloque la communication entre les chambres avants et les chambres arrières ainsi que la communication entre les chambres arrières et l'atmosphère selon la position du piston pneumatique dans le servomoteur.

En position de repos, c'est à dire quand le piston pneumatique n'est pas avancé dans le servomoteur, les chambres avants communiquent librement avec les chambres arrières. Les chambres sont alors toutes isolées de l'atmosphère. La dépression qu'impose la pompe à vide s'installe donc dans les chambres avants et dans les chambres arrières.

Au moment d'un freinage, durant une première phase du déplacement du piston pneumatique dans le servomoteur la communication entre les chambres avants et arrières est coupée par une valve de communication. Les chambres avants sont alors isolées des chambres arrières.

Durant une deuxième phase du déplacement du piston, les chambres arrières sont mises en communication avec l'atmosphère. Quand les chambres arrières sont en communication avec l'atmosphère, les chambres avants sont toujours isolées des chambres arrières et contiennent toujours une dépression.

La communication des chambres arrières avec l'atmosphère fait monter la pression dans les chambres arrières au même niveau que la pression atmosphérique. Il existe alors une différence de pression entre les chambres avants et les chambres arrières. Cette différence de pression fait avancer les jupes plaques séparant les chambres avants des chambres arrières et entraîne le piston pneumatique sur lequel les jupes plaques reposent.

Un ressort de rappel est généralement placé à l'intérieur d'un tel servomoteur. Ce ressort de rappel a pour fonction d'aider au retour en position de repos du piston pneumatique après freinage. Un tel ressort prend appui sur la paroi du servomoteur proche du maître cylindre d'un coté et sur le piston pneumatique de l'autre coté.

Une fois que la pédale de frein n'est plus appuyée, le ressort de rappel repousse le piston pneumatique dans sa position de repos. Les chambres arrières ne sont alors plus en communication avec l'atmosphère. La communication entre les chambres arrières et les chambres avants est alors rétablie. La dépression présente dans les chambres avants s'étend alors dans les chambres arrières.

Afin d'assurer l'étanchéité de la cloison rigide séparant la première chambre avant de la deuxième chambre arrière, sans entraver le mouvement du piston pneumatique dans le servomoteur, un joint d'étanchéité est situé sur un nez intérieur de la cloison rigide fixe. Ce joint entoure intégralement le piston pneumatique de manière étanche. Lors de son déplacement, le piston pneumatique coulisse de manière étanche à l'intérieur de ce joint d'étanchéité. L'étanchéité du joint d'étanchéité évite que la dépression dans les chambres avants ne disparaisse lors de la montée en pression dans les chambres arrières.

Un tel joint d'étanchéité comporte une première lèvre. Cette première lèvre s'étend parallèlement à l'axe de déplacement du piston pneumatique. Cette première lèvre s'étend dans une direction opposée à la direction d'avancée du piston pneumatique lors d'un freinage. Cette première lèvre est appuyée contre la paroi du piston pneumatique de manière étanche. Cette première lèvre est logée dans la première chambre avant. Cette première lèvre assure l'étanchéité entre la première chambre avant et la deuxième chambre arrière.

Lors d'un freinage, un maître cylindre activé par une tige de poussée doit toujours effectuer une course maximale de déplacement inférieure à la course de déplacement du piston pneumatique du servomoteur. De cette façon, la tige de poussée vient en butée dans le maître cylindre avant que la jupe plaque de la première chambre ne vienne au contact de la cloison rigide fixe. A cet effet, la course maximale dans le maître cylindre doit être inférieure à la course maximale d'une tige de poussée. Quand le maître cylindre et le piston pneumatique du servomoteur ont des longueurs de course très proches, il se peut, notamment pour des raisons de tolérances de fabrication ou de jeux de déformation des pièces du servomoteur dus à la pression, que la première jupe plaque vienne en contact contre le joint d'étanchéité fixé à la cloison rigide fixe.

Ce contact entre la première jupe plaque et le joint d'étanchéité s'effectue sur le chant de la première lèvre appuyée contre la paroi du piston pneumatique. Eventuellement ce contact se produit sur la paroi d'une deuxième lèvre en regard de la première jupe plaque. Ce contact entraîne le collage de la première jupe plaque sur le joint d'étanchéité. Or, quand un tel collage a lieu, la communication entre les deux chambres avants ne se fait plus. En effet, le joint d'étanchéité, collé à la jupe plaque, s'interpose de manière étanche entre la première chambre avant et le conduit de communication entre les chambres avants présent sur le piston pneumatique.

La dépression dans la première chambre avant est alors maintenue à l'intérieur de la première chambre avant. Il se crée alors un effet ventouse qui empêche la première jupe plaque de se décoller du joint d'étanchéité lors du relâchement de la pression sur le piston pneumatique. La première jupe plaque étant fixé au piston pneumatique, le retour en position de repos du piston pneumatique à l'intérieur du servomoteur ne peut pas avoir lieu. Il en résulte que la pédale de frein ne revient plus en place. Le véhicule reste bloqué ou, au mieux, se débloque lentement.

Pour résoudre ce problème, un ressort de rappel plus puissant pourrait être utilisé. Cependant un tel ressort, ayant une puissance suffisante pour décoller la première lèvre du joint d'étanchéité de la jupe plaque malgré le vide, réduirait l'efficacité de la poussée des jupes plaques due à la différence de pression entre les chambres. La jupe plaque n'entraînerait alors plus le piston pneumatique de manière satisfaisante pour permettre au servomoteur de remplir correctement son rôle.

Une autre solution imaginable a consisté à rajouter des reliefs sur la paroi de la deuxième lèvre du joint d'étanchéité fixé à la cloison fixe en regard de la première jupe plaque. Ces reliefs devaient permettre de créer un espace de circulation pour évacuer la dépression de la première chambre avant. Cet espace était sensé empêcher la dépression de se maintenir dans la première chambre avant. Cependant une telle solution s'avère à l'expérience inefficace. En effet, la déformation du joint d'étanchéité et de la première jupe plaque par la pression n'empêche pas l'emprisonnement de la dépression dans la première chambre avant. Cette solution n'assure pas une communication suffisante entre les chambres avants.

Pour résoudre ce problème l'invention prévoit de mettre des reliefs sur le chant de la première lèvre du joint d'étanchéité en regard de la première jupe plaque, de préférence en associant ces reliefs sur ces chants à des reliefs situées sur la deuxième lèvre du joint d'étanchéité. La première lèvre du joint d'étanchéité se présente alors sous la forme d'une lèvre crénelée.

Lors de l'avancée de la première jupe plaque vers la cloison fixe séparant la première chambre avant de la deuxième chambre arrière, la première jupe plaque fait pression sur les sommets des créneaux de la première lèvre du joint d'étanchéité.

Une fuite de communication se crée alors toujours dans l'espace entre les créneaux de la première lèvre du joint d'étanchéité. La jupe plaque ne peut venir se coller de manière étanche sur le joint dans cet espace. De la même manière, cette fuite de communication peut se prolonger entre des reliefs de la deuxième lèvre du joint d'étanchéité. La dépression peut alors être évacuée par ces fuites de communication et ne reste plus bloquée dans la première chambre avant. L'effet ventouse que créait cette dépression n'existe plus, et la première jupe plaque et le piston pneumatique peuvent alors retourner en position de repos.

L'invention a donc pour objet un servomoteur pneumatique tandem d'assistance de freinage d'un véhicule comportant une coque, un piston pneumatique coulissant dans la coque, deux couples de chambres, chaque couple comportant une chambre avant et une chambre arrière, la chambre avant étant situé plus proche d'un maître cylindre de freinage que la chambre arrière, une cloison fixe dans le servomoteur, séparant une première chambre avant d'une deuxième chambre arrière, une première jupe plaque, séparant la première chambre avant de la première chambre arrière, et une deuxième jupe plaque, séparant la deuxième chambre avant de la deuxième chambre arrière, ces jupes plaque étant mobiles, étanches et entraînant le piston pneumatique, un joint d'étanchéité fixé à la cloison fixe, le piston pneumatique coulissant à l'intérieur de ce joint de manière étanche, ce joint d'étanchéité comportant une première lèvre appliquée sur le piston pneumatique de manière étanche, et s'étendant parallèlement à l'axe de déplacement du piston pneumatique caractérisé en ce que la première lèvre est crénelée.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : Une coupe transversale d'une partie d'un servomoteur tandem au repos;
- Figure 2 : Une coupe transversale d'une partie d'un servomoteur tandem muni d'un joint d'étanchéité connu après une course maximale du piston pneumatique;
- Figure 3 : une vue en perspective schématique d'une partie d'un joint d'étanchéité fixé à la cloison fixe dans le servomoteur tandem selon l'invention ;

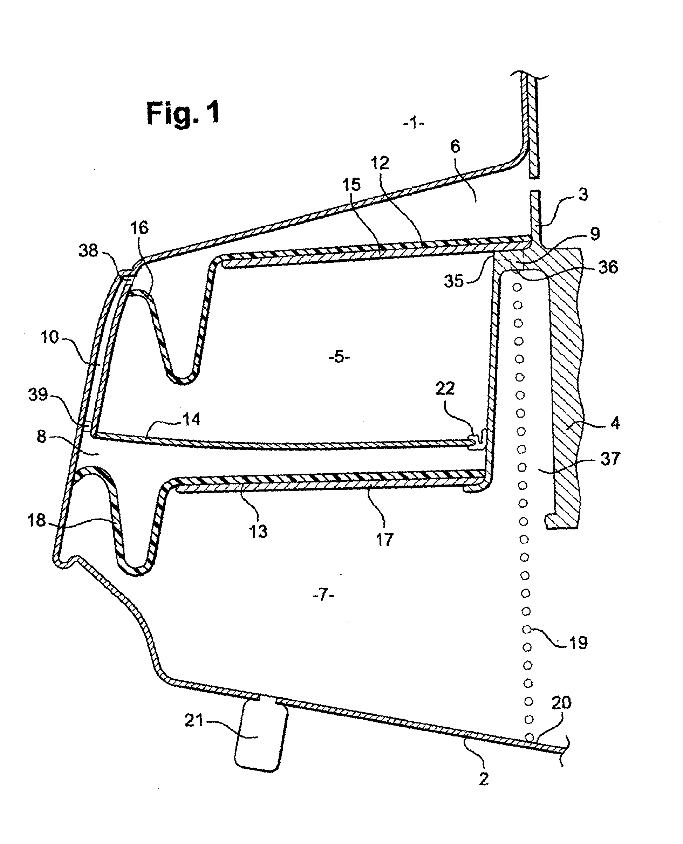

La figure 1 représente une coupe transversale d'une partie d'un servomoteur tandem 1 au repos. De préférence le servomoteur 1 ainsi que la plupart des pièces qui le composent ont une forme circulaire. Un servomoteur 1 comporte une coque extérieure 2. Le servomoteur 1 comporte un piston pneumatique 3. Ce piston pneumatique 3 comporte une tige de poussée 4 prévue pour faire pression sur un maître cylindre.

Le servomoteur 1 comporte une première chambre avant 5 et une première chambre arrière 6. Le servomoteur comporte aussi une deuxième chambre avant 7 et une deuxième chambre arrière 8.

La première chambre avant 5 est en communication avec la deuxième chambre avant 7 par l'intermédiaire d'un conduit de communication 9 pratiqué dans le piston pneumatique 3. Ce conduit de communication 9 débouche à une extrémité 35 dans la première chambre avant 5 et à une extrémité 36 dans une partie centrale creuse 37 du piston 3. La partie centrale creuse 37 est ouverte sur la deuxième chambre avant 7.

La première chambre arrière 6 est constamment en communication avec la deuxième chambre arrière 8 par un conduit de communication 10. Ce conduit de communication 10 est pratiqué, par exemple, dans la paroi de la coque 2. Ce conduit 10 débouche, en traversant la coque 2 par un passage 38, dans la première chambre arrière 6. Ce conduit 10 débouche, en traversant la coque 2 par un passage 39, dans la deuxième chambre arrière 8.

Le servomoteur 1 comporte par ailleurs une première jupe plaque 12 et une deuxième jupe plaque 13 ainsi qu'une cloison 14 fixe dans le servomoteur 1.

La première jupe plaque 12 comporte une plaque rigide 15 et une jupe souple 16. La plaque rigide 15 et la jupe souple 16 sont solidaires du piston 3. La jupe souple 16 est aussi fixée à une paroi de la coque 2 en regard du piston 3. La première jupe plaque 12 sépare de manière étanche la première chambre avant 5 de la première chambre arrière 6.

La deuxième jupe plaque 13 comporte une plaque rigide 17 et une jupe souple 18. La plaque rigide 17 et la jupe souple 18 sont solidaires du piston pneumatique 3. La jupe souple 18 est aussi fixée à une paroi de la coque 2 en regard du piston 3. La deuxième jupe plaque 13 sépare de manière étanche la deuxième chambre avant 7 de la deuxième chambre arrière 8.

Ces jupes plaques 12 et 13 sont mobiles et étanches dans le servomoteur 1. Les jupes plaques 12 et 13 entraînent le piston pneumatique 3 durant leurs déplacements, notamment par appui sur des épaulements du piston 3.

La cloison fixe 14 est solidaire de la coque 2 du servomoteur 1. Cette cloison fixe 14 sépare de manière étanche la première chambre avant 5 de la deuxième chambre arrière 8. La cloison fixe 14 est rigide. Le piston pneumatique 3 coulisse à l'intérieur d'un espace pratiqué dans la cloison fixe 14.

La première chambre avant 5 est délimitée par la première jupe plaque 12, le piston 3, la cloison 14 et la coque 2 du servomoteur 1. La deuxième chambre avant 7 est délimitée par le piston 3, la coque 2 du servomoteur 1 et la deuxième jupe plaque 13. La première chambre arrière est délimitée par la première jupe plaque 12, le piston 3 et la coque 2 du servomoteur 1. La deuxième chambre arrière est délimitée par le piston 3, la cloison 14, la coque 2 et la deuxième jupe plaque 13. Toutes les chambres que comporte le servomoteur 1 sont à volume variable.

La première chambre avant 5 et la deuxième chambre avant 7 sont respectivement plus proches du maître cylindre que la première chambre arrière 6 et la deuxième chambre arrière 8. Par ailleurs la deuxième chambre avant 7 et la deuxième chambre arrière 8 sont respectivement plus proches du maître cylindre que la première chambre avant 5 et la première chambre arrière 6.

Au repos, la première chambre avant 5 et la deuxième chambre avant 7 sont en communication avec la première chambre arrière 6 et la deuxième chambre arrière 8. Cette communication est assurée par la présence d'une valve de communication (non représentée ici) située dans le piston pneumatique 3. Cette valve de communication bloque ou autorise la communication entre les chambres avants et les chambres arrières lors d'un déplacement du piston 3 dans le servomoteur 1. Cette valve de communication bloque ou autorise aussi la communication entre les chambres arrières et l'atmosphère lors d'un déplacement du piston 3 dans le servomoteur 1.

Un ressort de rappel 19 est monté dans le servomoteur 1. Ce ressort de rappel 19 prend appui à une de ses extrémités contre le piston 3, et contre une paroi 20 de la coque 2 délimitant la deuxième chambre avant 7 du servomoteur 1 à son autre extrémité. Ce ressort de rappel 19 a pour fonction de ramener le piston 3 en position de repos après une avancée du piston 3.

Une pompe 21 à vide est reliée à la deuxième chambre avant 7. Cette pompe 21 à vide produit une dépression dans la deuxième chambre avant 7. Cette dépression s'étend dans la première chambre avant 5 via le conduit de communication 9 entre la première chambre avant 5 et la deuxième chambre avant 7. Cette pompe 21 à vide peut comporter une connexion à un circuit d'alimentation en carburant du moteur du véhicule.

Au repos, la communication entre les chambres avants et les chambres arrières, assurée par la valve de communication, fait s'étendre la dépression crée par la pompe 21 à vide jusque dans les chambres arrières.

Un joint d'étanchéité 22 est fixé sur la cloison fixe 14. Ce joint d'étanchéité 22 assure l'étanchéité de la cloison fixe 14 entre la première chambre avant 5 et la deuxième chambre arrière 8 sans entraver le déplacement du piston 3 dans le servomoteur 1. Ce joint d'étanchéité 22 entoure le piston 3. Le piston 3 coulisse de manière étanche à l'intérieur de ce joint d'étanchéité 22.

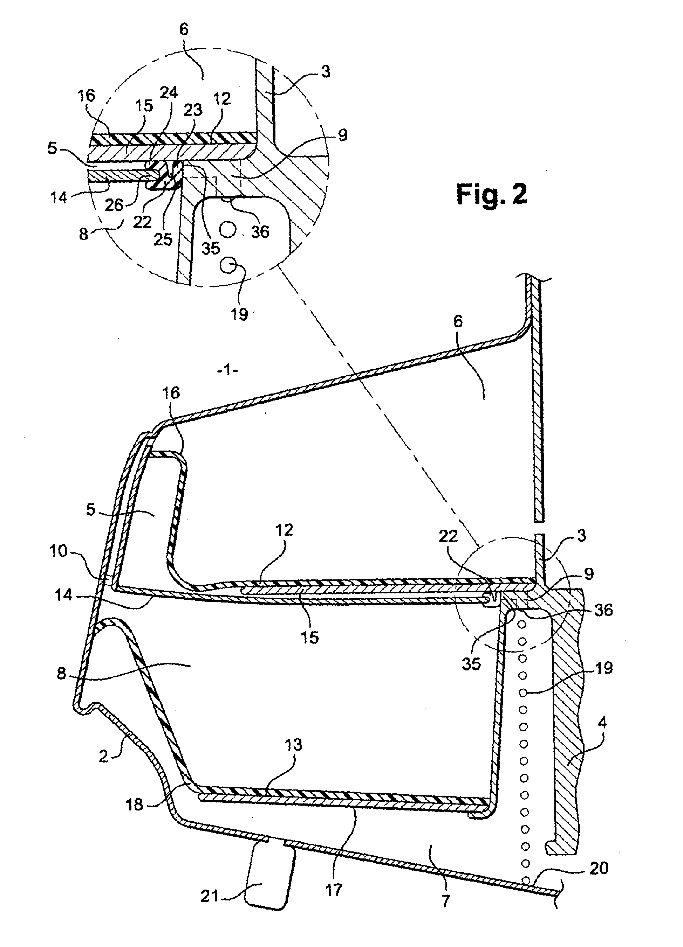

La figure 2 représente une coupe transversale d'une partie d'un servomoteur 1 muni d'un joint d'étanchéité connu dans une situation correspondant à une course maximale du piston 3. Lors d'une course maximale le corps du piston 3 va entraîner le blocage de la communication entre les chambres avants. Ce blocage de communication entre les chambres avants provient de ce que la première jupe plaque 12 se rapproche de la cloison fixe 14. En cas de course maximale du piston 3 et si le maître cylindre et le piston pneumatique 3 ont une course maximale proche, la première jupe plaque 12 vient se coller contre le joint d'étanchéité 22.

Ce joint d'étanchéité 22 comporte une première lèvre 23 appliquée sur le piston 3 de manière étanche. Cette application de manière étanche assure l'étanchéité entre la première chambre avant 5 et la deuxième chambre arrière 8.

Cette première lèvre 23 s'étend parallèlement à l'axe de déplacement du piston 3 lors de son avancée dans le servomoteur. Cette première lèvre 23 s'étend dans une direction opposée au déplacement du piston 3 lors d'un freinage. Cette première lèvre 23 s'étend dans la première chambre avant 5.

En général, le joint d'étanchéité 22 comporte une deuxième lèvre 24 en regard de la première jupe plaque 12. Cette deuxième lèvre 24 s'étend suivant un plan perpendiculaire à l'axe de mouvement du piston 3 dans la première chambre avant. Une rainure 25 peut être située sur le joint d'étanchéité 22 entre la première lèvre 23 et la deuxième lèvre 24. Une deuxième rainure 26 peut être prévue pour fixer le joint d'étanchéité 22 à la cloison fixe 14, la cloison fixe 14 s'emboîte dans cette deuxième rainure 26.

Lors du contact entre la première jupe plaque 12 et le joint d'étanchéité 22, la plaque rigide 15 vient appuyer sur la première lèvre 23. Cet appui devient étanche par la pression qu'exerce la plaque rigide 15 sur la première lèvre 23 du joint d'étanchéité 22. La dépression à l'intérieur de la première chambre avant 5 est donc isolée et bloquée à l'intérieur de cette première chambre avant 5. Le blocage se produit d'autant plus que la première lèvre 23 est située, en correspondance du maximum de la course, juste en regard des orifices 35 du conduit 9. Ce blocage entraîne un effet ventouse qui bloque la première jupe plaque 12 dans sa position, c'est à dire collée contre le joint d'étanchéité 22, quand la pression sur la pédale de frein est relâchée. Le piston pneumatique 3 étant solidaire de la jupe plaque 12, le piston 3 ne peut reprendre une position de repos au moment ou un conducteur relâche sa pression sur la pédale de frein.

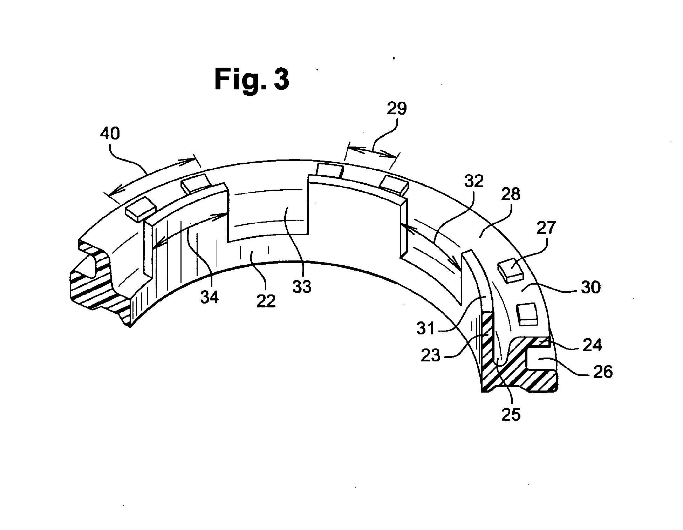

La figure 3 représente une vue en perspective schématique d'un exemple d'une partie d'un joint d'étanchéité 22 pour un servomoteur tandem 1 selon l'invention. Selon l'invention, la première lèvre 23 d'un tel joint d'étanchéité 22 est crénelée avec des créneaux tels que 31.

Lors du collage de la première jupe plaque 12 sur le joint d'étanchéité 22, la première jupe plaque 12 vient appuyer sur la première lèvre 23 du joint d'étanchéité 22.

Selon l'invention, la première jupe plaque 12 vient prendre appui sur les sommets des créneaux 31 de la première lèvre 23. Ces créneaux 31 empêchent la première jupe plaque 12 de se coller de manière étanche sur le joint d'étanchéité 22 dans un espace 32 séparant deux créneaux 31 de la première lèvre 23. Une fuite de communication 33 existe alors entre la première chambre avant 5 et le conduit 9 de communication entre les deux chambres avants 5 et 7. Cette fuite de communication 33 passe entre l'espace 32 séparant deux créneaux 31 et la première jupe plaque 12.

La dépression contenue dans la première chambre avant 5 n'est alors plus bloquée par le joint d'étanchéité 22. Cette dépression peut s'évacuer depuis la première chambre avant 5 via la fuite de communication 33. L'évacuation de cette dépression permet aux jupes plaques 12 et 13, ainsi qu'au piston 3, de ne plus être bloquées en position de course maximale et de revenir en position de repos normalement.

Afin de fournir une communication efficace entre la première chambre avant 5 et le conduit de communication 9 situé sur piston 3 lors du contact de la première jupe plaque 12 sur le joint d'étanchéité 22, un espace 32 entre deux créneaux 31 doit être situé en regard d'un débouché 35 d'un conduit 9 de communication entre les chambres avants. Un créneau 31 ne vient alors pas en appui contre un tel débouché 35. Une partie de la première lèvre 23 ne vient pas obstruer le conduit de communication 9.

Dans ce but, plusieurs créneaux sont réalisés sur la lèvre 23 pour correspondre à plusieurs débouchés 35. Eventuellement la régularité de répartition des créneaux est différente de la régularité de répartition des orifices pour assurer toujours une fuite. En pratique les longueurs des sommets 31 des créneaux sont plus grandes que les longueurs des espaces 32. La forme des créneaux est à bords droits. Il serait possible de lui donner un profil sinusoïdal.

Dans des cas encore plus extrêmes, il peut arriver que la première jupe plaque 12 vienne se coller contre la deuxième lèvre 24 du joint d'étanchéité 22 de manière étanche. L'étanchéité de ce collage bloque alors aussi la dépression dans la première chambre avant 5 et bloque le retour en position de repos du piston pneumatique 3. Afin d'assurer aussi une fuite de communication efficace entre la première chambre avant 5 et le conduit de communication 9 dans ces cas la, on peut, selon l'invention, disposer des reliefs 27 sur la paroi 28 de la deuxième lèvre 24 en regard de la première jupe plaque 12. De tels reliefs 27 assurent une fuite de communication 30 entre la première chambre avant 5 et les fuites de communication 33 créées par les espaces 32 entre les créneaux 31. Ces fuites de communication 30 et 33 combinées évitent le blocage de la dépression dans la première chambre avant 5 dans de tels cas extrêmes.

Ces reliefs 27 peuvent se présenter sous forme de protubérances 27. Ces protubérances s'élèvent par rapport à un plan d'une couronne formée par la lèvre 24.

Pour faciliter la communication entre les fuites de communications 30 et 33, un des espaces 32 entre deux créneaux 31 peut être situé en regard d'un espace 29 entre deux reliefs 27.

La communication passant par l'espace 32 entre deux créneaux 31 pouvant être plus facile que la communication passant par l'espace 29 séparant deux reliefs 27, le nombre reliefs 27 peut être plus important que le nombre de créneaux 31. Ainsi le nombre de reliefs 27 peut être de préférence deux fois supérieur au nombre de créneaux 31.

Le nombre de créneaux 31 pouvant être moins important que le nombre de reliefs 27, un créneau 31 peut être situé en regard d'un espace 29 entre deux reliefs 27.

De la même manière et pour les même raisons que pour les créneaux 31, on peut disposer les reliefs 27 à intervalles réguliers sur la paroi 28 de la deuxième lèvre 24.

Les espaces 32 séparant les créneaux 31 ont une longueur d'arc égale à celle des espaces 29 séparant deux reliefs 27. Ainsi, une longueur d'un arc 34 formé par un créneau 31 est égale à une longueur 40 séparant les extrémités opposées de deux reliefs 27 côte à côte.

Selon l'invention, les créneaux 31 entrent en contact avec la première jupe plaque 12 avant les reliefs 27. Cette caractéristique contribue à éviter un collage étanche entre la deuxième lèvre 24 et la première plaque jupe 12. Les créneaux 31 subissent, dans une telle situation, la pression de la deuxième jupe plaque 12 en évitant aux reliefs 27 de trop subir de pression. Dans ce but, les créneaux 31 s'élèvent en direction de la première jupe plaque 12 à un niveau plus haut que celui des reliefs 27

Enfin, afin d'améliorer la qualité d'étanchéité d'un tel joint d'étanchéité 22, le joint d'étanchéité 22 est en caoutchouc.

## Revendications

1. Servomoteur pneumatique tandem (1) d'assistance de freinage d'un véhicule comportant
- une coque (2),
- un piston pneumatique (3) coulissant dans la coque,
- deux couples de chambres, chaque couple comportant une chambre avant (5,7) et une chambre arrière (6,8), la chambre avant étant situé plus proche d'un maître cylindre de freinage que la chambre arrière,
- une cloison fixe (14) dans le servomoteur, séparant une première chambre avant (5) d'une deuxième chambre arrière (8),
- une première jupe plaque (12), séparant la première chambre avant (5) de la première chambre arrière (6), et une deuxième jupe plaque (13), séparant la deuxième chambre avant (7) de la deuxième chambre arrière (8), ces jupes plaque étant mobiles, étanches et entraînant le piston pneumatique (3),
- un joint d'étanchéité (22) fixé à la cloison fixe, le piston pneumatique (3) coulissant à l'intérieur de ce joint (22) de manière étanche,
- ce joint d'étanchéité comportant une première lèvre (23) appliquée sur le piston pneumatique (3) de manière étanche, et s'étendant parallèlement à l'axe de déplacement du piston pneumatique
**caractérisé en ce que** la première lèvre (23) est crénelée.

2. Servomoteur selon la revendication 1 **caractérisé en ce que** le crénelage comporte des créneaux séparés par des espaces, un espace (32) entre deux créneaux (31) est situé en regard d'un débouché (35) d'un conduit (10) d'un corps du piston pneumatique pour ménager une communication (9) entre la première chambre avant (5) et la deuxième chambre avant (7).

3. Servomoteur selon l'une des revendications 1 à 2 **caractérisé en ce que** des créneaux (31) de la première lèvre (23) sont à intervalle régulier.

4. Servomoteur selon l'une des revendications 1 à 3 **caractérisé en ce que** le joint d'étanchéité comporte une deuxième lèvre (24) s'étendant dans la première chambre avant (5) perpendiculairement à l'axe de déplacement du piston pneumatique (3), cette deuxième lèvre comportant des reliefs (27) sur sa paroi (28) en regard de la première jupe plaque (12), un espace (32) entre deux créneaux (31) est situé en regard d'un espace (29) entre deux reliefs (27).

5. Servomoteur selon la revendication 4 **caractérisé en ce que** le nombre de reliefs (27) est deux fois supérieur au nombre de créneaux (31).

6. Servomoteur selon l'une des revendications 4 à 5 **caractérisé en ce qu'**un créneau est situé en regard d'un espace entre deux reliefs.

7. Servomoteur selon l'une des revendications 4 à 6 **caractérisé en ce que** des reliefs (27) de la deuxième lèvre (24) sont à intervalle régulier.

8. Servomoteur selon l'une des revendications 4 à 7 **caractérisé en ce qu'**une longueur d'un arc (34) formé par un créneau (31) est égale à une longueur séparant des extrémités opposées de deux reliefs (27) côte à côte.

9. Servomoteur selon l'une des revendications 4 à 8 **caractérisé en ce que** les créneaux s'élèvent à un niveau plus haut que les reliefs en direction de la première jupe plaque.

10. Servomoteur selon l'une des revendications 1 à 9 **caractérisé en ce que** le joint d'étanchéité (22) est en caoutchouc.

## Claims

1. Tandem pneumatic brake booster (1) for a vehicle comprising
- a shell (2),
- a pneumatic piston (3) sliding in the shell,
- two pairs of chambers, each pair comprising a front chamber (5,7) and a rear chamber (6,8), the front chamber being situated closer to a brake master cylinder than the rear chamber,
- a fixed partition (14) in the booster, separating a first front chamber (5) from a second rear chamber (8),
- a first plate skirt (12), separating the first front chamber (5) from the first rear chamber (6), and a second plate skirt (13), separating the second front chamber (7) from the second rear chamber (8), these plate skirts being movable, sealed and moving the pneumatic piston (3),
- a seal (22) fixed to the fixed partition, the pneumatic piston (3) sliding inside this seal (22) in a sealed manner,
- this seal comprising a first lip (23) pressed on the pneumatic piston (3) in a sealed manner, and extending parallel to the axis of movement of the pneumatic piston,
**characterized in that** the first lip (23) is crenelated.

2. Booster according to Claim 1, **characterized in that** the crenelation comprises merlons separated by spaces, a space (32) between two merlons (31) is situated opposite an outlet (35) of a duct (10) of a body of the pneumatic piston to arrange a communication (9) between the first front chamber (5) and the second front chamber (7).

3. Booster according to one of Claims 1 to 2, **characterized in that** merlons (31) of the first lip (23) are at regular intervals.

4. Booster according to one of Claims 1 to 3, **characterized in that** the seal comprises a second lip (24) extending in the first front chamber (5) perpendicular to the axis of movement of the pneumatic piston (3), this second lip comprising protrusions (27) on its wall (28) opposite the first plate skirt (12), a space (32) between two merlons (31) is situated opposite a space (29) between two protrusions (27).

5. Booster according to Claim 4, **characterized in that** the number of protrusions (27) is twice as great as the number of merlons (31).

6. Booster according to one of Claims 4 to 5, **characterized in that** a merlon is situated opposite a space between two protrusions.

7. Booster according to one of Claims 4 to 6, **characterized in that** protrusions (27) of the second lip (24) are at regular intervals.

8. Booster according to one of Claims 4 to 7, **characterized in that** a length of an arc (34) formed by a merlon (31) is equal to the length separating the opposite ends of two protrusions (27) side by side.

9. Booster according to one of Claims 4 to 8, **characterized in that** the merlons rise to a level higher than the protrusions in the direction of the first plate skirt.

10. Booster according to one of Claims 1 to 9, **characterized in that** the seal (22) is made of rubber.

## Patentansprüche

1. Pneumatischer Tandem-Servomotor (1) zur Bremsunterstützung eines Fahrzeugs, mit
- einer Schale (2),
- einem in der Schale gleitenden pneumatischen Kolben (3),
- zwei Kammerpaaren, wobei jedes Paar eine vordere Kammer (5, 7) und eine hintere Kammer (6, 8) aufweist, wobei die vordere Kammer näher an einem Hauptbremszylinder liegt als die hintere Kammer,
- einer feststehenden Trennwand (14) im Servomotor, die eine erste vordere Kammer (5) von einer zweiten hinteren Kammer (8) trennt,
- einer ersten Plattenschürze (12), die die erste vordere Kammer (5) von der ersten hinteren Kammer (6) trennt, und einer zweiten Plattenschürze (13), die die zweite vordere Kammer (7) von der zweiten hinteren Kammer (8) trennt, wobei diese Plattenschürzen beweglich und dicht sind und den pneumatischen Kolben (3) antreiben,
- einer an der feststehenden Wand befestigten Dichtung (22), wobei der pneumatische Kolben (3) in dichter Weise in dieser Dichtung (22) gleitet,
- wobei diese Dichtung eine erste Lippe (23) aufweist, die in dichter Weise am pneumatischen Kolben (3) anliegt und sich parallel zur Verlagerungsachse des pneumatischen Kolbens erstreckt,
**dadurch gekennzeichnet, dass** die erste Lippe (23) gezahnt ist.

2. Servomotor nach Anspruch 1, **dadurch gekennzeichnet, dass** die Verzahnung durch Zwischenräume getrennte Zacken aufweist, wobei ein Zwischenraum (32) zwischen zwei Zacken (31) gegenüber einem Auslass (35) einer Leitung (10) eines Körpers des pneumatischen Kolbens angeordnet ist, so dass eine Verbindung (9) zwischen der ersten vorderen Kammer (5) und der zweiten vorderen Kammer (7) gebildet ist.

3. Servomotor nach einem der Ansprüche 1 bis 2, **dadurch gekennzeichnet, dass** Zacken (31) der ersten Lippe (23) gleichmäßig beabstandet sind.

4. Servomotor nach einem der Ansprüche 1 bis 3, **dadurch gekennzeichnet, dass** die Dichtung eine zweite Lippe (24) aufweist, die sich in der ersten vorderen Kammer (5) senkrecht zur Verlagerungsachse des pneumatischen Kolbens (3) erstreckt, wobei diese zweite Lippe an ihrer Wand (28) gegenüber der ersten Plattenschürze (12) erhöhte Abschnitte (27) aufweist, wobei ein Zwischenraum (32) zwischen zwei Zacken (31) gegenüber einem Zwischenraum (29) zwischen zwei erhöhten Abschnitten (27) liegt.

5. Servomotor nach Anspruch 4, **dadurch gekennzeichnet, dass** die Anzahl der erhöhten Abschnitte (27) der doppelten Anzahl von Zacken (31) entspricht.

6. Servomotor nach einem der Ansprüche 4 bis 5, **dadurch gekennzeichnet, dass** eine Zacke gegenüber einem Zwischenraum zwischen zwei erhöhten Abschnitten liegt.

7. Servomotor nach einem der Ansprüche 4 bis 6, **dadurch gekennzeichnet, dass** erhöhte Abschnitte (27) der zweiten Lippe (24) gleichmäßig beabstandet sind.

8. Servomotor nach einem der Ansprüche 4 bis 7, **dadurch gekennzeichnet, dass** eine Länge eines durch eine Zacke (31) gebildeten Bogens (34) einer Länge zwischen entgegengesetzten Enden von zwei nebeneinander angeordneten erhöhten Abschnitten (27) entspricht.

9. Servomotor nach einem der Ansprüche 4 bis 8, **dadurch gekennzeichnet, dass** sich die Zacken in Richtung der ersten Plattenschürze auf eine höhere Ebene erheben als die erhöhten Abschnitte.

10. Servomotor nach einem der Ansprüche 1 bis 9, **dadurch gekennzeichnet, dass** die Dichtung (22) aus Kautschuk ist.
